# FASCICULE DE BREVET EUROPEEN

(11) **EP 3 048 045 B1**
(45) Date de publication et mention de la délivrance du brevet: **26.12.2018**
(21) Numéro de dépôt: 16152485.5
(22) Date de dépôt: 22.01.2016
(51) Int. Cl.: B64C 25/40

(54) **ENTRAÎNEMENT EN ROTATION D'UNE ROUE D AÉRONEF**
DREHANTRIEB EINES LUFTFAHRZEUGRADS
AIRCRAFT WHEEL ROTATION DRIVE

(30) Priorité: 23.01.2015 FR 1550554; 22.05.2015 FR 1554616; 29.05.2015 FR 1554888
(43) Date de publication de la demande: 27.07.2016
(73) Titulaire: Safran Landing Systems, 78140 Vélizy-Villacoublay (FR)
(72) Inventeur: MARTIN, Frédéric, 78140 VELIZY VILLACOUBLAY (FR); COURTOIS DE LOURMEL, Yves, 78120 RAMBOUILLET (FR); WANGERMEZ, Maxence, 78140 VELIZY VILLACOUBLAY (FR); DAFFOS, Mathieu, 78140 VELIZY VILLACOUBLAY (FR); PHELUT, Pierre-Guillaume, 78140 VELIZY VILLACOUBLAY (FR)
(74) Mandataire: Parzy, Benjamin Alain

(56) Documents cités:
- EP-A1- 2 527 249
- EP-A2- 2 551 192
- WO-A1-85/01265
- WO-A1-2014/023941
- GB-A- 189 605 009
- US-A- 3 005 510

## Description

L'invention concerne un procédé d'entraînement en rotation d'une roue d'aéronef.

### ARRIERE-PLAN TECHNOLOGIQUE DE L'INVENTION

Il a été proposé divers procédés pour entraîner une roue portée par un atterrisseur d'un aéronef. En particulier, il a été proposé d'entraîner la roue par un actionneur d'entraînement comportant un pignon de sortie qui engrène avec une couronne d'entraînement solidaire de la roue. Pour permettre la libre rotation de la roue, un dispositif d'embrayage est prévu entre le moteur d'entraînement et le pignon de sortie. Cependant, le pignon de sortie reste en permanence engrené avec la couronne d'entraînement, ce qui n'est pas favorable du point de vue de la sécurité. EP2551192 et WO2014/023941 divulguent chacun un équipage d'entraînement par engrenage.

Il a également été proposé d'utiliser un actionneur d'entraînement en rotation dont l'arbre de sortie porte un galet coopérant avec une piste d'entraînement solidaire de la roue. Cependant, cet agencement souffre de divers inconvénients. En particulier, pour des questions de sécurité, il faut pouvoir désolidariser le galet de la piste d'entraînement de la roue, ce qui impose de prévoir un actionneur mobile. Cette disposition est particulièrement difficile à mettre en oeuvre. En outre, le passage de la totalité du couple d'entraînement par un seul galet se révèle difficile. WO85/01265 divulgue un équipage d'entraînement par friction.

### OBJET DE L'INVENTION

L'invention vise à fournir des moyens d'entraînement en rotation d'une roue d'aéronef ne souffrant pas des inconvénients précités.

### PRESENTATION DE L'INVENTION

A cet effet, il est proposé un équipage d'entraînement en rotation par friction d'une roue d'aéronef équipée d'une piste d'entraînement et montée pour tourner autour d'un axe de rotation sur un essieu porté par une partie basse d'un atterrisseur d'aéronef, selon la revendication 1. L' équipage comportant :
- une base destinée à être fixée à la partie basse de l'atterrisseur ;
- un coulisseau monté à coulissement sur la base selon un axe de coulissement s'étendant selon une direction radiale en service ;
- un support monté à pivotement sur le coulisseau selon un axe de pivotement parallèle à l'axe de rotation de la roue ;
- deux galets montés à rotation sur le support selon des axes de rotation parallèles à l'axe de pivotement ;
- un arbre central monté à rotation sur le support et pourvu de moyens de son entraînement en rotation, l'arbre central étant en prise avec les deux galets pour assurer leur entraînement en rotation ;
- des moyens d'actionnement pour déplacer le coulisseau et le support entre une position de désengagement dans laquelle les galets sont éloignés de la piste d'entraînement de la roue, et une position d'engagement dans laquelle les galets sont maintenus en contact avec un effort d'appui déterminé avec la piste d'entraînement de la roue.

Un tel équipage garantit un appui égal des deux galets sur la piste au gré des déformations de celle-ci, sous un effort d'appui constant qui est fonction du couple à transmettre. Le déplacement du coulisseau permet de gérer l'engagement et le désengagement des galets, de façon très simple, sans qu'il soit nécessaire de prévoir un actionneur d'entraînement intégralement mobile. Celui-ci peut être fixe, à condition de prévoir une transmission entre la sortie de l'actionneur et l'arbre central capable d'accommoder le mouvement du coulisseau.

A cet effet, et selon un aspect particulier de l'invention, on propose un dispositif d'entraînement en rotation par friction d'une roue d'aéronef équipée d'une piste d'entraînement et montée pour tourner autour d'un axe de rotation sur un essieu porté par une partie basse d'un atterrisseur d'aéronef, le dispositif comportant :
- Au moins un équipage d'entraînement disposé pour coopérer avec la roue à entraîner ;
- Un actionneur d'entraînement en rotation solidaire de la partie inférieure ayant un arbre de sortie;
- Des moyens de transmission d'un mouvement de rotation entre l'arbre de sortie de l'actionneur d'entraînement et l'arbre central de l'équipage compatible avec les déplacements du support de l'équipage.

De préférence, l'arbre de sortie de l'actionneur est monté tournant selon un axe de rotation parallèle aux axes de rotation des galets, les moyens de transmission comportant un élément souple d'entraînement sans fin, du type chaîne, courroie, câble ou similaire, enroulé autour d'un organe d'entraînement solidaire de l'arbre de sortie de l'actionneur d'entraînement, et autour d'un organe d'entraînement de l'arbre central de l'équipage, l'élément souple s'étendant vers l'arbre central en formant deux brins sensiblement perpendiculaires à l'axe de coulissement du coulisseau de l'équipage.

Ainsi, le déplacement du coulisseau provoque une déformation du trajet de l'élément souple, mais qui n'altère pratiquement pas sa longueur, de sorte que la transmission de la rotation de l'actionneur vers les galets continue à être assurée quelle que soit la position du coulisseau, sans qu'il soit besoin de prévoir un quelconque dispositif d'accouplement/désaccouplement.

De préférence, le dispositif comprend deux équipages disposés de part et d'autre de l'arbre de sortie de l'actionneur d'entraînement, deux éléments souples d'entraînement sans fin étant enroulés chacun autour d'un des organes d'entraînement des arbres centraux des équipages en présentant deux brins obliques par rapport à l'axe de coulissement des équipages, les deux éléments souples d'entraînement sans fin étant enroulés autour de l'arbre de sortie de l'actionneur.

### BREVE DESCRIPTION DES FIGURES

L'invention sera mieux comprise à la lumière de la description qui suit d'un mode particulier de réalisation de l'invention, en référence aux figures des dessins annexés, parmi lesquels :
- la figure 1 est une vue en perspective de la partie basse d'un atterrisseur d'aéronef (l'une des roues a été omise pour plus de clarté) équipé d'un dispositif d'entraînement selon l'invention à deux équipages ;
- la figure 2 est une vue de côté de l'atterrisseur de la figure 1, montrant l'agencement radial des deux équipages ;
- la figure 3 est une vue en coupe de l'un des équipages selon un plan passant par l'axe de coulissement de coulisseau ;
- la figure 4 est une vue en coupe de l'un des équipages selon un plan passant par les axes de rotation des galets ;
- les figures 5a et 5b sont des schémas montrant les positions de désengagement et d'engagement des galets sur la piste d'entraînement de la roue ;
- la figure 6 est une vue analogue à celle de la figure 1, l'actionneur d'entraînement et son carter ayant été omis pour montrer l'élément souple d'entraînement sans fin qui entraîne en rotation les galets des deux équipages;
- la figure 7 est une vue analogue à celle de la figure 1, montrant une variante de réalisation de l'invention utilisant un élément souple d'entraînement sans fin par équipage ;
- la figure 8 est une vue de côté de l'atterrisseur montrant une variante de réalisation de l'invention utilisant un élément souple d'entraînement sans fin par équipage.

### DESCRIPTION DETAILLEE D'UN MODE DE REALISATION DE L'INVENTION

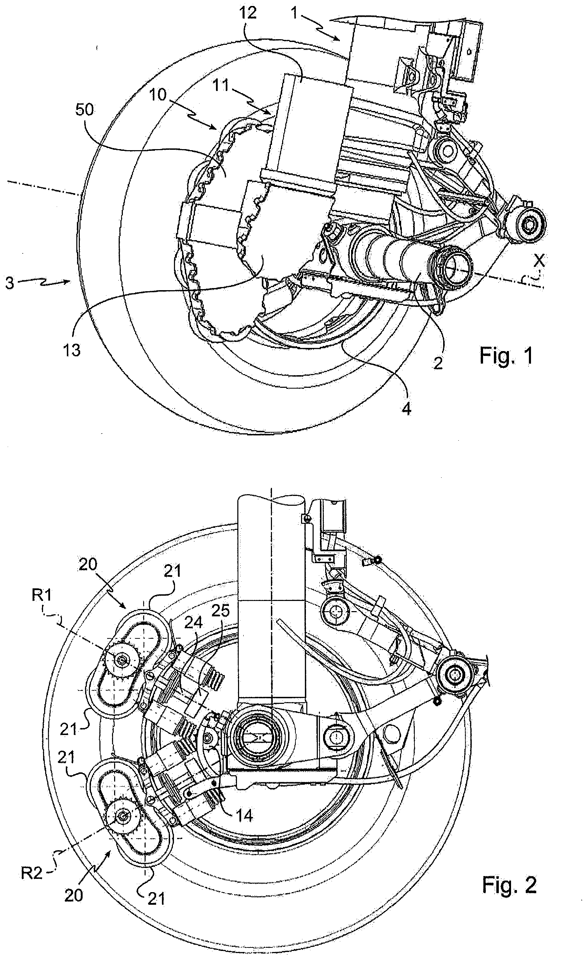

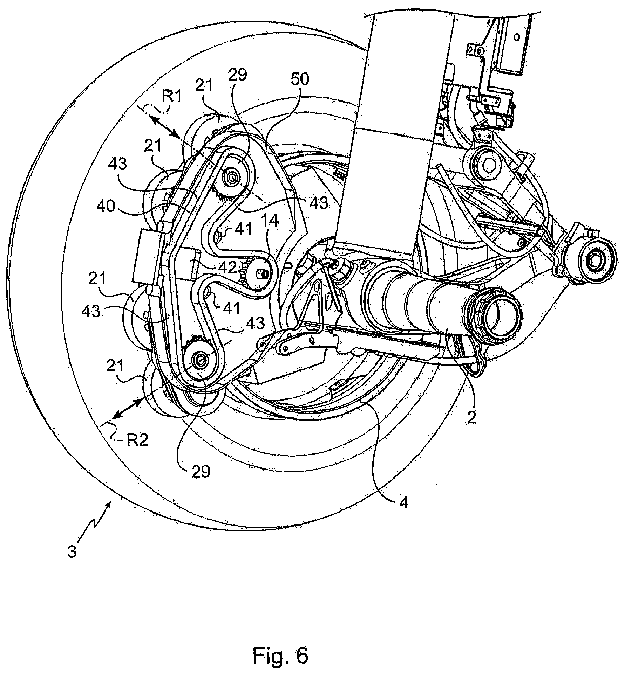

Comme cela est illustré aux figures 1 et 2, l'invention est applicable à un atterrisseur 1 d'aéronef portant un essieu 2 en sa partie basse pour recevoir des roues 3 (une seule est visible) et permettre sa rotation autour d'un axe de rotation X. Chacune des roues est ici équipée d'une piste d'entraînement 4 rapportée sur la jante de la roue. L'atterrisseur 1 est équipé d'un dispositif d'entraînement 10 selon l'invention comportant un actionneur d'entraînement 11 dont on voit ici le moteur électrique 12 associé à un réducteur 13 pour entraîner un arbre de sortie (non visible sur la figure 1, mais dont on distingue la roue de sortie 14 sur la figure 2 et la figure 6). L'actionneur 11 est associé à deux équipages 20, comportant chacun deux galets 21. On voit sur la figure 2 l'agencement général des deux équipages 20 selon des directions radiales R1 et R2, qui s'étendent donc perpendiculairement à l'axe X en intersectant ce dernier.

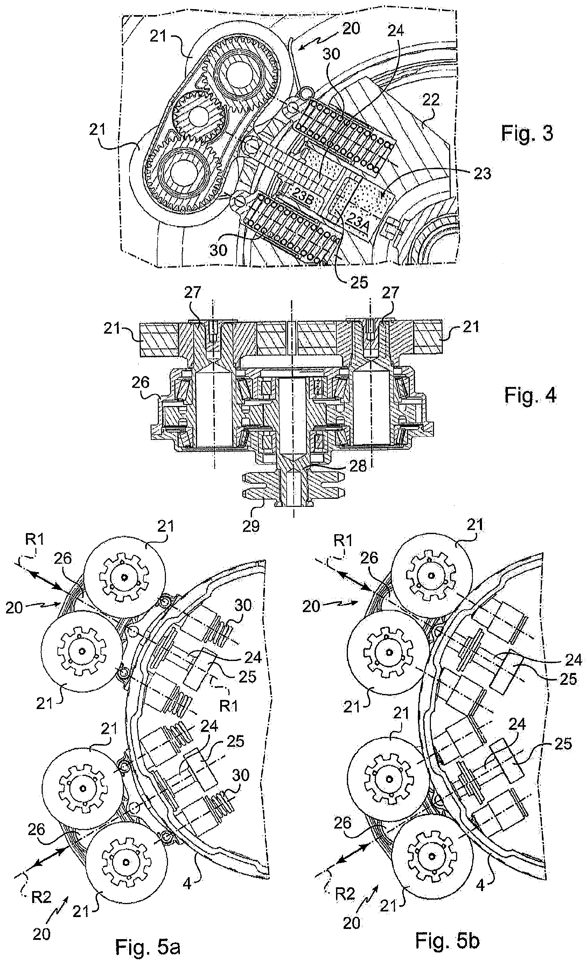

Un des équipages est illustré en détail aux figures 3 et 4. Chaque équipage comprend une base 22 solidarisée à la partie inférieure de l'atterrisseur 1. La base 22 définit une cavité cylindrique 23 dont l'axe central coïncide ici avec la direction radiale (R1 ou R2). Un coulisseau 24 est solidaire d'un piston 25 monté à coulissement étanche dans la cavité 23 pour définir de part et d'autre du piston 25 deux chambres hydrauliques 23A, 23B alimentées par des ports hydrauliques respectifs (non visibles ici). Le coulisseau 24 a une extrémité formant oeillet sur lequel un support 26 est monté pour pivoter selon un axe parallèle à l'axe X. Le support 26 reçoit deux arbres 27 supportant les galets 21 qui sont montés à rotation selon des axes parallèles à l'axe X. Le support reçoit également un arbre central 28, monté à rotation selon un axe parallèle à l'axe X, qui engrène avec les arbres 27, et qui est muni d'une roue d'entraînement 29. Le coulisseau 24 forme avec la cavité 23 un actionneur hydraulique permettant le déplacement commandé du support 26 entre une position de dégagement illustrée à la figure 5a dans laquelle les galets 21 sont éloignées de la piste d'entraînement 4, et une position d'engagement illustrée à la figure 5b dans laquelle les galets 21 sont en contact avec la piste d'entraînement 4. Des moyens élastiques 30 sont agencés pour repousser le coulisseau et le support vers la position de dégagement. En l'occurrence ici, des ressorts 30 sont disposés sur l'équipage 20 pour exercer sur le support 26 un effort tendant à déplacer le coulisseau 24 et le support 26 vers la position de dégagement.

Ces ressorts 30 permettent un actionnement simple effet du support. En effet, il suffit de mettre les deux chambres hydrauliques 23A, 23B au retour hydraulique pour provoquer le déplacement du coulisseau 24 et du support 26 vers la position de dégagement, qui est une position stable. Pour faire venir les galets 21 en position d'engagement, il suffit de relier la chambre hydraulique externe 23B à la source de pression de l'aéronef et la maintenir ainsi sous pression, pour assurer un effort d'appui constant des galets 21 sur la piste d'entraînement 4, déterminé par la pression du circuit hydraulique.

Le fait que le support 26 soit libre en pivotement permet de garantir le contact des deux galets sur la piste d'entraînement avec un effort de pression sensiblement constant, quelle que soit la déformation de la piste d'entraînement lors du roulage de l'aéronef.

De préférence, les ports alimentant les chambres hydrauliques extérieures 23B des deux équipages sont reliés entre eux, de la même façon que les ports alimentant les chambres hydrauliques intérieures 23A sont reliés entre eux. Ainsi, seules deux lignes hydrauliques sont à descendre le long de l'atterrisseur.

Comme cela est visible à la figure 6, la roue de sortie 14 solidaire de l'arbre de sortie de l'actionneur d'entraînement est tournante selon un axe parallèle à l'axe X qui s'étend ici sensiblement dans un plan médian aux directions R1 et R2. Une chaîne 40 est enroulée autour de la roue de sortie 14 ainsi qu'autour des roues d'entraînement 29 des arbres centraux 27 des équipages. Ici, la chaîne est protégée par un carter 50 (visible à la figure 1), dont l'une des coquilles a été enlevée sur la figure 6 pour mettre la chaîne 40 en évidence. La chaîne 40 est contrainte par des poulies de renvoi 41 et une glissière 42 à présenter vers chaque équipage des brins 43 qui s'étendent selon des directions obliques aux directions radiales R1 et R2, proches de la perpendiculaire. Ainsi, lors du déplacement des supports 26 entre les position d'engagement et de désengagement, les brins 43 suivent les mouvements des roues d'entraînement 29 indiqués par les doubles flèches, sans variation notable de longueur des brins 43, de sorte que la transmission par la chaîne 40 est compatible avec le déplacement des supports 26, sans qu'il soit besoin d'un quelconque organe de désaccouplement.

Ainsi, la structure du dispositif d'entraînement selon l'invention est très simple, avec un actionneur d'entraînement fixe, deux alimentations hydrauliques connectées aux ports hydrauliques des bases 22, avec une séquence d'actionnement particulièrement simple. Les éléments mobiles sont réduits au strict minimum. Aucun désaccouplement de la transmission n'est nécessaire.

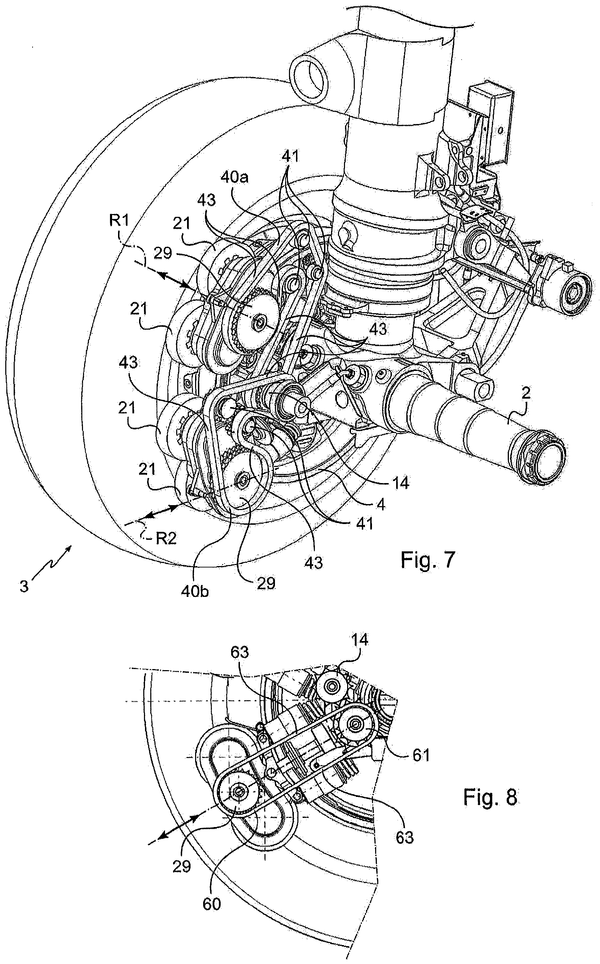

Selon une variante illustrée à la figure 7, la roue de sortie 14 solidaire de l'arbre de sortie de l'actionneur d'entraînement est tournante selon un axe parallèle à l'axe X qui s'étend ici sensiblement dans un plan médian aux directions R1 et R2. Deux chaînes 40a, 40b sont enroulées autour de la roue de sortie 14 de l'actionneur, ainsi que, respectivement, autour d'une des roues d'entraînement 29 des arbres centraux 27 des équipages. Ici, les chaînes 40a, 40b sont protégées par un carter 50 (visible à la figure 1), dont l'une des coquilles a été enlevée sur la figure 7 pour mettre les chaînes 40a, 40b en évidence. Les chaînes 40a, 40b sont contraintes par des poulies de renvoi 41 et une glissière 42 à présenter vers chaque équipage des brins 43 qui s'étendent selon des directions obliques aux directions radiales R1 et R2. Ainsi, lors du déplacement des supports 26 entre les position d'engagement et de désengagement, les brins 43 suivent les mouvements des roues d'entraînement 29 indiqués par les doubles flèches, sans variation notable de longueur des brins 43, de sorte que la transmission par la chaîne 40 est compatible avec le déplacement des supports 26, sans qu'il soit besoin d'un quelconque organe de désaccouplement.

Par ailleurs, il est possible de choisir les orientations des brins 43 de sorte à garantir l'égalité des efforts radiaux exercés par la tension des brins 43 les galets d'un module donné, quel que soit le couple transmis par l'actionneur. Un simple équilibre statique permet de choisir les directions des deux brins pour obtenir cet effet très intéressant, qui intervient pour les deux sens de rotation des galets.

En outre, les brins 43 des deux chaînes 40a, 40b, sont tous orientés dans le même sens, de sorte que les brins tendus se situent du même côté des organes d'entraînement des équipages et tirent dans le même sens sur ces derniers.

Selon une autre variante de l'invention illustrée à la figure 8, l'entraînement des galets est encore assuré par une chaîne 60, mais celle-ci est enroulée entre la roue d'entraînement 29 et une roue auxiliaire 61 qui est montée tournante directement sur l'équipage, et qui bouge donc avec celui-ci lorsque celui-ci coulisse. La chaîne 60 présente ainsi deux brins 63 qui sont sensiblement parallèles à l'axe de coulissement de l'équipage. L'arbre de sortie de l'actionneur comporte une roue dentée 14 qui coopère avec une roue dentée solidaire de la roue auxiliaire 61 au moins lorsque les galets sont ramenés au contact de la piste d'entraînement de la roue. La direction des brins de la chaîne fait que la tension du brin moteur tend à plaquer les galets contre la piste, contribuant ainsi à l'effort de pression des galets contre la piste, ce qui diminue d'autant l'effort à exercer par l'actionneur hydraulique pour appuyer les galets contre la piste.

Selon une autre variante de réalisation, chaque équipage est associé à une chaîne 60 comme dans la variante illustrée à la figure 8. Mais, dans cette variante, aucun actionneur hydraulique n'est formé entre le coulisseau 24 et la buse 22.

Les moyens d'actionnement qui déplacent le coulisseau et le support à l'encontre des ressorts 30 sont constitués par la chaîne 60 elle-même, dont la tension lors de l'activation de l'actionneur d'entraînement 11 suffit à contrer l'action des ressorts 30 et assure le déplacement des galets 21 vers la piste d'entraînement 4 et le maintien des galets 21 contre celle-ci.

Selon une variante, la roue auxiliaire 61 est déplaçable par exemple radialement ou encore circulairement autour du pignon 14, et l'équipage est muni d'un actionneur de pression par exemple de type électromécanique, déplaçant la roue auxiliaire 61 pour augmenter la tension de la chaîne 60 et ainsi contrôler l'effort de pression des galets 21 sur la piste d'entraînement 4.

En pratique, la roue auxiliaire 61 peut être montée à l'extrémité d'un bras oscillant, l'actionneur de pression agissant sur le bras oscillant pour déplacer la roue auxiliaire 61, et, par conséquent, jouer le même rôle que les moyens d'actionnement précités en déplaçant le coulisseau et le support à l'encontre des ressorts 30, via la chaîne 60.

L'invention n'est pas limitée à ce qui vient d'être décrit, mais englobe toute variante entrant dans le cadre défini par les revendications.

En particulier, bien qu'ici le dispositif d'entraînement comprend deux équipages, on pourra utiliser un seul équipage, ou au contraire plus de deux équipages, du moment que l'organe de transmission de mouvement entre l'actionneur d'entraînement fixe et l'arbre central du ou des équipages soit compatible avec le mouvement des équipages.

Bien que l'organe de transmission illustré ici soit une chaîne, il pourra s'agir plus généralement de tout élément d'entraînement souple sans fin, comme une courroie ou un câble disposé comme décrit ci-dessus, et, encore plus généralement, de tout organe de transmission compatible avec le déplacement du support de l'équipage, comme par exemple une transmission par cardans avec un arbre cannelé de longueur variable.

Enfin, bien que dans les exemples illustrés, le support des galets est déplacé soit par un actionneur hydraulique électromécanique, soit par un actionneur de pression déplaçant une roue auxiliaire, l'invention couvre tout mode de déplacement du support entre la position d'engagement et la position de dégagement, du moment que le support soit pivotant pour permettre aux deux galets de venir en appui sur la piste d'entraînement de façon homogène.

## Revendications

1. Equipage d'entraînement en rotation destiné à être monté en partie basse d'un atterrisseur d'aéronef pour entrainer sélectivement en rotation par friction une roue d'aéronef équipée d'une piste d'entraînement et montée pour tourner autour d'un axe de rotation (X) sur un essieu porté par la partie basse de l'atterrisseur d'aéronef, l'équipage comportant :
- une base (22) fixée à la partie basse de l'atterrisseur ;
- un coulisseau (24) monté à coulissement sur la base selon un axe de coulissement s'étendant selon une direction radiale (R1, R2) perpendiculairement à l'axe de rotation (X) en intersectant ce dernier, lorsque l'équipage est monté sur l'atterrisseur en service ;
- un support (26) monté à pivotement sur le coulisseau selon un axe de pivotement parallèle à l'axe de rotation de la roue ;
- deux galets (21) montés à rotation sur le support selon des axes de rotation parallèles à l'axe de pivotement ;
- un arbre central (28) monté à rotation sur le support et pourvu de moyens de son entraînement en rotation, l'arbre central étant en prise avec les deux galets pour assurer leur entraînement en rotation ;
- des moyens d'actionnement (23A, 23B, 30) pour déplacer le coulisseau et le support le long de l'axe de coulissement entre une position de désengagement dans laquelle les galets sont éloignés de la piste d'entraînement de la roue, et une position d'engagement dans laquelle les galets sont maintenus en contact avec un effort d'appui déterminé avec la piste d'entraînement de la roue, de sorte que les galets entraînent en rotation la roue par friction quand l'arbre central est entraîné en rotation.

2. Equipage selon la revendication 1, dans lequel les moyens d'actionnement comportent un piston (25) solidaire du coulisseau (24) et coulissant à étanchéité dans une cavité cylindrique (23) de la base de sorte à y définir deux chambres hydrauliques pour former les moyens d'actionnement hydraulique pour déplacer le coulisseau et le support associé entre les positions d'engagement et de dégagement.

3. Equipage selon la revendication 2, comportant des moyens élastiques (30) agencés pour repousser le coulisseau et le support vers la position de dégagement.

4. Dispositif d'entraînement en rotation être monté en partie basse d'un atterrisseur d'aéronef pour entraîner sélectivement en rotation par friction d'une roue d'aéronef équipée d'une piste d'entraînement et montée pour tourner autour d'un axe de rotation sur un essieu porté par la partie basse de l'atterrisseur d'aéronef, le dispositif comportant :
- Au moins un équipage d'entraînement (20) selon la revendication 1 disposé pour coopérer avec la roue à entraîner ;
- Un actionneur d'entraînement (11) en rotation destiné à être solidaire de la partie basse de l'atterrisseur d'aéronef et ayant un arbre de sortie;
- Des moyens de transmission (40) d'un mouvement de rotation entre l'arbre de sortie de l'actionneur d'entraînement et l'arbre central de l'équipage compatible avec les déplacements du support de l'équipage.

5. Dispositif d'entraînement selon la revendication 4, dans lequel l'arbre de sortie de l'actionneur est monté tournant selon un axe de rotation parallèle aux axes de rotation des galets, les moyens de transmission comportant un élément souple d'entraînement sans fin (40), du type chaîne, courroie, câble ou similaire, enroulé autour d'un organe d'entraînement (14) solidaire de l'arbre de sortie de l'actionneur d'entraînement, et autour d'un organe d'entraînement (29) de l'arbre central de l'équipage, l'élément souple s'étendant vers l'arbre central formant deux brins (43) sensiblement perpendiculaires à l'axe de coulissement du coulisseau de l'équipage.

6. Dispositif d'entraînement selon la revendication 5 comprenant deux équipages d'entraînement (20, 20), chacun selon la revendication 1, disposés de part et d'autre de l'arbre de sortie de l'actionneur d'entraînement, l'élément souple d'entraînement sans fin (40) étant enroulé autour des deux organes d'entraînement (29,29) des arbres centraux des équipages.

7. Dispositif d'entraînement selon la revendication 4 comprenant deux équipages d'entraînement (20, 20), chacun selon la revendication 1, disposés de part et d'autre de l'arbre de sortie de l'actionneur d'entraînement, lequel est monté tournant selon un axe de rotation parallèle aux axes de rotation des galets, les moyens de transmission comportant deux éléments souples d'entraînement sans fin (40a, 40b), du type chaîne, courroie, câble ou similaire, enroulés chacun autour d'un des organes d'entraînement des arbres centraux des équipages en formant deux brins obliques par rapport à l'axe de coulissement des équipages, les deux éléments souples d'entraînement sans fin étant enroulés autour de l'arbre de sortie de l'actionneur.

8. Dispositif d'entraînement selon la revendication7, dans lequel les brins des éléments souples d'entraînement sans fin sont orientés selon des directions déterminées de façon à garantir l'égalité des efforts radiaux exercés par les galets d'un module donné, quel que soit le couple transmis par l'actionneur.

9. Dispositif d'entraînement selon la revendication7, dans lequel les brins des éléments souples se situent du même côté des organes d'entraînement des arbres centraux des équipages et tirent dans le même sens.

10. Dispositif d'entraînement selon la revendication4, dans lequel l'arbre de sortie de l'actionneur est monté tournant selon un axe de rotation parallèle aux axes de rotation des galets et dans lequel un élément souple d'entraînement sans fin (60) du type chaîne, courroie, câble ou similaire, est enroulé autour d'une roue auxiliaire (61) solidaire de l'équipage mobile et d'un organe d'entraînement (29) de l'arbre central de l'équipage, de sorte que l'élément souple définisse deux brins (63) sensiblement parallèles à l'axe de coulissement de l'équipage mobile, la roue auxiliaire étant entraînée en rotation par l'actionneur d'entraînement au moins lorsque les galets sont au contact de la piste de la roue.

11. Dispositif d'entraînement selon la revendication 10, dans lequel les moyens d'actionnement sont constitués de l'élément souple d'entraînement sans fin dont la tension lors de l'activation de l'actionneur d'entraînement provoque le déplacement des galets et le maintien de ceux-ci dans la position d'engagement.

12. Dispositif d'entraînement selon la revendication 11, dans lequel la roue auxiliaire (61) est déplaçable radialement au moyen d'un actionneur de pression pour augmenter sélectivement la tension de la chaîne afin de contrôler l'effort de pression des galets sur la piste d'entraînement.

## Patentansprüche

1. Drehantriebseinrichtung, die dazu bestimmt ist, im unteren Teil eines Luftfahrzeugfahrwerks angebracht zu werden, um mittels Reibung ein Luftfahrzeugrad selektiv in Drehung anzutreiben, das mit einer Antriebsbahn versehen und drehbar um eine Rotationsachse (X) auf einer Radachse gelagert ist, die von dem unteren Teil des Luftfahrzeugfahrwerks getragen wird, wobei die Einrichtung umfasst:
- eine Basis (22), die an dem unteren Teil des Fahrwerks befestigt ist;
- einen Schieber (24), der an der Basis entlang einer Verschiebungsachse verschiebbar gelagert ist, die sich im Betrieb in einer radialen Richtung (R1, R2) erstreckt, die senkrecht zur Rotationsachse (X) ist und diese schneidet, wenn die Einrichtung an dem Fahrwerk angebracht ist;
- einen Träger (26), der schwenkbar an dem Schieber gemäß einer Schwenkachse gelagert ist, die parallel zur Rotationsachse des Rades ist;
- zwei Rollen (12), die drehbar an dem Träger um Rotationsachsen gelagert sind, die parallel zur Schwenkachse sind;
- eine zentrale Welle (28), die drehbar an dem Träger gelagert und mit Mitteln für ihren Drehantrieb versehen ist, wobei die zentrale Welle mit den beiden Rollen in Eingriff steht, um deren Drehantrieb zu gewährleisten;
- Betätigungsmittel (23A, 23B, 30), um den Schieber und den Träger entlang der Verschiebungsachse zwischen einer Nichteingriffsposition, in der die Rollen zur Antriebsbahn des Rades beabstandet sind, und einer Eingriffsposition zu bewegen, in der die Rollen mit einer vorgegebenen Auflagekraft mit der Antriebsbahn des Rades in Kontakt gehalten werden, so dass die Rollen das Rad mittels Reibung in Drehung antreiben, wenn die zentrale Welle in Drehung angetrieben wird.

2. Einrichtung nach Anspruch 1, bei der die Betätigungsmittel einen Kolben (25) umfassen, der fest mit dem Schieber (24) verbunden ist und auf dichte Weise in einem zylindrischen Hohlraum (23) der Basis gleitet, so dass er dort zwei hydraulische Kammern definiert, um die hydraulischen Betätigungsmittel zu bilden, um den Schieber und den dazugehörigen Träger zwischen der Eingriffsposition und der Nichteingriffsposition zu bewegen.

3. Einrichtung nach Anspruch 2, umfassend elastische Mittel (30), die so ausgebildet sind, dass sie den Schieber und den Träger in Richtung der Nichteingriffsposition zurückstoßen.

4. Drehantriebsvorrichtung, die im unteren Teil eines Luftfahrzeugfahrwerks angebracht ist, um mittels Reibung ein Luftfahrzeugrad selektiv in Drehung anzutreiben, das mit einer Antriebsbahn versehen und drehbar um eine Rotationsachse auf einer Radachse gelagert ist, die von dem unteren Teil des Luftfahrzeugfahrwerks getragen wird, wobei die Vorrichtung umfasst:
- mindestens eine Antriebseinrichtung (20) nach Anspruch 1, die so angeordnet ist, dass sie mit dem anzutreibenden Rad zusammenwirkt;
- einen Drehantriebsaktor (11), der dazu bestimmt ist, fest mit dem unteren Teil des Luftfahrzeugfahrwerks verbunden zu werden und eine Abtriebswelle hat;
- Übertragungsmittel (40) zur Übertragung einer Drehbewegung zwischen der Abtriebswelle des Antriebsaktors und der zentralen Welle der Einrichtung, die mit den Bewegungen des Trägers der Einrichtung kompatibel ist.

5. Antriebsvorrichtung nach Anspruch 4, bei der die Abtriebswelle des Aktors drehbar um eine Rotationsachse gelagert ist, die parallel zu den Rotationsachsen der Rollen ist, wobei die Übertragungsmittel ein flexibles endloses Antriebselement (40) der Art Kette, Riemen, Kabel oder dergleichen umfassen, das um ein Antriebsorgan (14) gewickelt ist, das fest mit der Abtriebswelle des Antriebsaktors verbunden ist, sowie um ein Antriebsorgan (29) zum Antrieb der zentralen Welle der Einrichtung, wobei sich das flexible Element in Richtung der zentralen Welle erstreckt und zwei Stränge (43) bildet, die im Wesentlichen senkrecht zur Verschiebungsachse des Schiebers der Einrichtung sind.

6. Antriebsvorrichtung nach Anspruch 5, umfassend zwei Antriebseinrichtungen (20, 20), die jeweils nach Anspruch 1 ausgebildet und zu beiden Seiten der Abtriebswelle des Antriebsaktors angeordnet sind, wobei das flexible endlose Antriebselement (40) um zwei Antriebsorgane (29, 29) der zentralen Wellen der Einrichtungen gewickelt ist.

7. Antriebsvorrichtung nach Anspruch 4, umfassend zwei Antriebseinrichtungen (20, 20), die jeweils nach Anspruch 1 ausgebildet und zu beiden Seiten der Abtriebswelle des Antriebsaktors angeordnet sind, die drehbar um eine Rotationsachse gelagert ist, die parallel zu den Rotationsachsen der Rollen ist, wobei die Übertragungsmittel zwei flexible endlose Antriebselemente (40a, 40b) der Art Kette, Riemen, Kabel oder dergleichen umfassen, die jeweils um eines der Antriebsorgane der zentralen Wellen der Einrichtungen gewickelt sind und dabei zwei Stränge bilden, die in Bezug auf die Verschiebungsachse der Einrichtungen geneigt sind, wobei die beiden flexiblen endlosen Antriebselemente um die Abtriebswelle des Aktors gewickelt sind.

8. Antriebsvorrichtung nach Anspruch 7, bei der die Stränge der flexiblen endlosen Antriebselemente gemäß vorgegebenen Richtungen ausgerichtet sind, so dass eine Gleichheit der radialen Kräfte, die von den Rollen eines gegebenen Moduls ausgeübt werden, garantiert wird, wie auch immer das von dem Aktor übertragene Drehmoment ist.

9. Antriebsvorrichtung nach Anspruch 7, bei der sich die Stränge der flexiblen Elemente auf einer selben Seite der Antriebsorgane der zentralen Wellen der Einrichtungen befinden und in dieselbe Richtung ziehen.

10. Antriebsvorrichtung nach Anspruch 4, bei der die Abtriebswelle des Aktors drehbar um eine Rotationsachse gelagert ist, die parallel zu den Rotationsachsen der Rollen ist, und bei der ein flexibles endloses Antriebselement (60) der Art Kette, Riemen, Kabel oder dergleichen um ein Hilfsrad (61) gewickelt ist, das fest mit der beweglichen Einrichtung und einem Antriebsorgan (29) der zentralen Welle der Einrichtung verbunden ist, so dass das flexible Element zwei Stränge (63) definiert, die im Wesentlichen parallel zur Verschiebungsachse der beweglichen Einrichtung sind, wobei das Hilfsrad von dem Antriebsaktor in Drehung angetrieben wird, zumindest wenn die Rollen in Kontakt mit der Bahn des Rades sind.

11. Antriebsvorrichtung nach Anspruch 10, bei der die Betätigungsmittel aus dem flexiblen endlosen Antriebselement gebildet sind, dessen Spannung während der Aktivierung des Antriebsaktors die Verschiebung der Rollen und das Halten derselben in der Eingriffsposition verursacht.

12. Antriebsvorrichtung nach Anspruch 11, bei der das Hilfsrad (61) mittels eines Druckaktors radial verschiebbar ist, um selektiv die Spannung der Kette zu erhöhen, um die Druckkraft der Rollen auf die Antriebsbahn zu steuern.

## Claims

1. Rotation drive unit intended to be mounted in the lower part of an aircraft landing gear for selectively rotating by friction an aircraft wheel equipped with a drive track and mounted to turn about a rotation axis (X) on an axle carried by the lower part of the aircraft landing gear, the unit comprising:
- a base (22) fixed to the lower part of the landing gear;
- a slider (24) mounted on the base to slide along a sliding axis extending in a radial direction (R1, R2) perpendicular to and intersecting the rotation axis (X) when the unit is mounted on the landing gear in service;
- a support (26) mounted on the slider to pivot about a pivot axis parallel to the rotation axis of the wheel;
- two rollers (21) mounted on the support to rotate about rotation axes parallel to the pivot axis;
- a central shaft (28) rotatably mounted on the support and provided with means for driving it in rotation, the central shaft being engaged with the two rollers to drive them in rotation;
- actuating means (23A, 23B, 30) for moving the slider and the support along the sliding axis between a disengagement position in which the rollers are moved away from the drive track of the wheel and an engagement position in which the rollers are held in contact with the drive track of the wheel with a particular bearing force, so that the rollers drive the wheel in rotation by friction when the central shaft is driven in rotation.

2. Unit according to claim 1, wherein the actuating means include a piston (25) fastened to the slider (24) and sliding in a sealed manner in a cylindrical cavity (23) of the base so as to define therein two hydraulic chambers to form the hydraulic actuating means for moving the slider and associated support between the engagement and disengagement positions.

3. Unit according to claim 2, including elastic means (30) arranged to push the slider and the support toward the disengagement position.

4. Rotation drive device for mounting in the lower part of an aircraft landing gear for selectively driving in rotation by friction an aircraft wheel equipped with a drive track and mounted to turn about a rotation axis on an axle carried by the lower part of the aircraft landing gear, the device including:
- at least one drive unit (20) according to claim 1 disposed to cooperate with the wheel to be driven;
- a rotation drive actuator (11) intended to be fastened to the lower part of the aircraft landing gear and having an output shaft;
- means (40) for transmitting a rotational movement between the output shaft of the drive actuator and the central shaft of the unit compatible with the movements of the support of the unit.

5. Drive device according to claim 4, wherein the output shaft of the actuator is mounted to turn about a rotation axis parallel to the rotation axes of the rollers, the transmission means including a flexible endless drive element (40), of the chain, belt, cable or similar type, wound around a drive member (14) fastened to the output shaft of the drive actuator and around a drive member (29) of the central shaft of the unit, the flexible element extending toward the central shaft forming two runs (43) substantially perpendicular to the sliding axis of the slider of the unit.

6. Drive device according to claim 5 comprising two drive units (20, 20) each according to claim 1 disposed on either side of the output shaft of the drive actuator, the flexible endless drive element (40) being wound around the two drive members (29, 29) of the central shafts of the units.

7. Drive device according to claim 4 comprising two drive units (20, 20) each according to claim 1 disposed on either side of the output shaft of the drive actuator, which is mounted to turn about a rotation axis parallel to the rotation axes of the rollers, the transmission means including two endless flexible drive elements (40a, 40b) of the chain, belt, cable or similar type each wound around one of the drive members of the central shafts of the units forming two runs oblique with respect to the sliding axis of the units, the two flexible endless drive elements being wound around the output shaft of the actuator.

8. Drive device according to claim 7, wherein the runs of the flexible endless drive elements are oriented in directions determined so as to guarantee that equal radial forces are exerted by the rollers of a given module, regardless of the torque transmitted by the actuator.

9. Drive device according to claim 7, wherein the runs of the flexible elements are situated on the same side of the drive members of the central shafts and pull in the same direction.

10. Drive device according to claim 4, wherein the output shaft of the actuator is mounted to turn about a rotation axis parallel to the rotation axes of the rollers and wherein a flexible endless driving element (60) of the chain, belt, cable or similar type is wound around an auxiliary wheel (61) fastened to the mobile unit and a drive member (29) of the central shaft of the unit so that the flexible element defines two runs (63) substantially parallel to the sliding axis of the mobile unit, the auxiliary wheel being driven in rotation by the drive actuator at least when the rollers are in contact with the track of the wheel.

11. Drive device according to claim 10, wherein the actuating means consist of the flexible endless drive element the tension in which on activation of the drive actuator causes the rollers to be moved and to be maintained in the engagement position.

12. Drive device according to claim 11, wherein the auxiliary wheel (61) is radially movable by a pressure actuator selectively to increase the tension of the chain in order to control the force with which the rollers press on the drive track.
